(19) Europäisches Patentamt
European Patent Office
Office européen des brevets

(11) **EP 4 425 820 B1**

(12) **EUROPEAN PATENT SPECIFICATION**

(45) Date of publication and mention
of the grant of the patent:
**17.09.2025 Bulletin 2025/38**

(21) Application number: **23020104.8**

(22) Date of filing: **03.03.2023**

(51) International Patent Classification (IPC):
*H04L 9/08* (2006.01)      *H04L 9/32* (2006.01)

(52) Cooperative Patent Classification (CPC):
**H04L 9/3297; H04L 9/0872**

(54) **A METHOD AND A SYSTEM FOR VERIFYING PERSONAL DATA**

VERFAHREN UND SYSTEM ZUR ÜBERPRÜFUNG PERSÖNLICHER DATEN

PROCÉDÉ ET SYSTÈME DE VÉRIFICATION DE DONNÉES PERSONNELLES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**04.09.2024 Bulletin 2024/36**

(73) Proprietor: **Giesecke+Devrient ePayments GmbH 81677 München (DE)**

(72) Inventor: **Wallhäußer, Curd 84405 Dorfen (DE)**

(74) Representative: **Giesecke+Devrient IP Prinzregentenstraße 161 81677 München (DE)**

(56) References cited:
**US-A1- 2006 177 113      US-A1- 2020 374 270**

- CASASSA MONT M ET AL: "The HP Time Vault Service: Innovating the way confidential information is disclosed, at the right time /http://www.hpl.hp.com/techreports/2002/HPL-2002-243.html>", TECH REPORT HPL, XX, XX, vol. REPORT HPL-2002-243, 4 September 2002 (2002-09-04), pages 1 - 26, XP003007638

**Description**

The invention relates to a method and a system for verifying personal data.

Personal data, also known as identity data or personal information or personally identifiable information, PII is any information related to an identified or identifiable (natural) person. According to EU directive 95/46/EC, an identifiable (natural) person is one who can be identified, directly or indirectly, by reference to an identifier such as a name, an identification number, location data, an online identifier or to one or more factors specific to the physical, physiological, genetic, mental, economic, cultural or social identity of that natural person.

Personal data must be protected against misuse by appropriate technical and organizational measures. For that reason, an electronic identification ("eID") as a digital solution for proof of identity of persons or organizations is used.

The personal data are often used to authenticate the person. Authentication is the process of verifying the identity, e.g. the personal data.

When implementing an electronic identity, e.g. eID, care must therefore be taken to ensure that, firstly, personal identity attributes are only transmitted to reputable service providers with a legitimate interest and a convincing data security concept, and second, that the transmitted data is worthless to any third party.

In many implementations of electronic identities, the personal data is provided with an electronic signature to prove its authenticity. This signature is applied to the personal data by the issuer of the respective eID and, according to current standards, cannot be forged, but can be reproduced at will. As a result, each copy of the combination of personal data and the signature thereof is comparable to a certified copy.

An example of such an implementation is US 2020/374270, where personal data are signed and the signature comprises time stamp data.

There is the problem that any entity (e.g., a service provider) who comes into possession of the personal data with signature has demonstrably authentic data (if successful verified) and can also pass on this authentic data to any third party at will without the need that the owner of the personal data being able to control this. Furthermore, authenticated data may be stored by that entity.

Therefore, personal data should not simply be provided with a digital signature to prove authenticity and transmitted to the recipient. Instead, the authenticity of the data should be ensured by a hardware chip and implicitly proven during the identification process. This means that the authenticity of the personal data can only be verified within the communication between the service provider and the user. In this way, the service provider can still determine that the identity is genuine. However, if the personal data is later passed on to a third party (without authorization), the service provider can no longer prove its authenticity, which means that the personal data loses its value for criminals and unauthorized persons.

However, it is another problem that personal data that is moderately confidential, such as a name, an age, an address, a date of birth, etc., becomes highly confidential data as soon as it is digitally authenticated. Together with the valid digital signature, the personal data can be used and misused as proof of identity, as it is verifiably authentic data.

A known service provider can record a complete communication session (incl. session key) with the verification service, and thus subsequently prove to a third unauthorized user (e.g. a spammer, for whom verified addresses are of particular value) that the data is authentic.

For avoidance of such scenarios and to ensure a high level of confidentiality, extremely high technical and bureaucratic hurdles are imposed on service providers or government agencies that want or need to read and verify personal data.

According to known approaches, these technical hurdles consist, among other things, of the fact that the service provider is not given the digital signature on the personal data directly, but only the information as to whether the digital signature has been successfully verified via an additional (trustworthy) intermediary personal data service. Any exchange of information between the service provider and the intermediary personal data service and between the intermediary personal data service and the hardware that stores the personal data must be cryptographically secured. This increases complexity in a verification process.

The bureaucratic hurdles are that the intermediary personal data service and the service provider must have acquired authorization in advance from the issuing authority for authorization certificates and must have obtained the corresponding certificates from another authority, the certifier (and keep them up to date).

So, there is a need to further reduce these technical and bureaucratic hurdles which may be achieved by avoiding the possibility of re-using a digital signature on personal data.

The above-identified problems and needs are solved with the features of the independent patent claims. Further advantageous embodiments are described in the dependent patent claims.

In an aspect of the present invention there is provided a method for verifying personal data. The method comprises the following steps: digitally signing, by means of a secure element, of personal data, wherein the digital signature comprises timestamp data, the timestamp data being issued by a public authority unit; transmitting, by means of a secure element, of the personal data and the signed personal data to a service provider unit for verifying the personal data; and publishing, by means of the public authority, a cryptographic private key used for digitally signing the personal data when a publication criterion is fulfilled.

The secure element is preferably a secure element of the user or citizen whose personal data needs to be verified (authenticated) for use of the services provided by the service provider unit. The secure element may be an eID of the user or citizen.

A digital signature is a scheme that is used for verifying the authenticity of the personal data. A valid digital signature, where the prerequisites are satisfied, gives the service provider unit very high confidence that the personal data was created by a known secure element (authenticity), and that the personal data was not altered in transit (integrity). Digital signatures are used to detect forgery or tampering.

The digital signature used herein employs asymmetric cryptography. The digital signature scheme typically comprises three algorithms: (1) A key generation algorithm that outputs a private key and a corresponding public key of asymmetric cryptography. (2) A signing algorithm that, given the personal data and the private key, produces the signature. This (2) signing algorithm is meant in the digitally signing method step. (3) A signature verifying algorithm that, given the personal data, the public key and the signature itself, either accepts or rejects the personals data authenticity. (3) is meant with verifying the personal data.

In the transmitting-step, the digital signature of the personal data is preferably transmitted together with the personal data. In such a case, the personal data is provided by the secure element to the service provider unit and for convenience, it is also transmitted to the service provider unit.

In alternative scenarios of the transmitting-step, only the digital signature of the personal data is transmitted from the secure element to the service provider unit. So, the personal data that needs to be verified is identified by the service provider unit and the secure element only provides the digital signature. In such a scenario, the personal data to be verified may be provided to the service provider unit via other channels, such as data inputted to the service provider by the user or an authorized entity. In this scenario, personal data that may or may not be stored at the secure element, are not provided by the secure element.

When the publication criterion is fulfilled, the private key used for signing the personal data is published. Publishing means that the private key becomes publicly available to everyone. For publishing, the private key may be registered into a data base of the public authority unit, the data base may be (read-) accessible to everyone.

Publishing the private key means that the digital signature is useless, because upon publishing this private key, anyone (non-trustworthy or not) would be in the position to generate this digital signature (transmitted to the service provider).

So, in contrast to known concepts, the personal data together with the digital signature of these personal data are transmitted from the secure element to the service provider unit directly without the need of an intermediary personal data service. However, by performing the publishing-step, the digital signature loses its authenticating character because the cryptographic private key that was used for digitally signing the personal data is now public information and can be used by anyone.

In other words, once the private key has become public, highly confidential data (data including a valid digital signature being authentic data) turn into moderately confidential data, namely data with a digital signature that could be generated by anyone.

Because of the publishing-step, the signed personal data that may be spied out from the service provider unit or even forwarded maliciously by the service provider unit cannot be used as authentic data anymore. Since this method does not require additional intermediate service provider units, it is less complex and data transmission becomes less technically challenging and less bureaucratic.

A (digital) timestamp data is generated and issued by a public authority unit. A timestamp data is a sequence of characters or encoded information that represents a timing, usually a giving date and time of day that can have a resolution of a small fraction of a second. By use of a public authority unit, such as a timestamp server, an authentic timestamp data is generated and used when signing the personal data. The public authority unit may be an entity that generates a trusted timestamps according to RFC 3161 or ANSI ASC X.9.95 standard. Alternatively, any suitable and trustworthy timestamp server may be used as the public authority unit.

Preferably, the public authority unit is a timestamp server that is operated by an issuer of the secure elements, such as an eID issuance authority.

A publication criterion ensures that the digital signature is published.

The publishing may be made upon determining that the publication criterion is fulfilled. The determining may be performed by the public authority unit and upon determining, the publishing may be performed. The determining may alternatively be made at the secure element and/or the service provider unit that informs the public authority unit accordingly and upon informing the public authority unit, the publishing may be performed.

The publication criterion may be a time criterion defining a time point at which the publication of the private key needs to occur or is to be performed.

The publication criterion may be a use criterion. There a predefined number of verification-attempts for verifying the personal data with a corresponding cryptographic public key may fulfill the publication criterion. The predefined number of verification-attempts being preferably less than five, more preferably less than three, most preferably one attempt. Upon reaching the predefined number, the public authority unit will be informed in an automated manner and will publish the private key. Here, the informing process may be a new verification rule that needs to be implemented at the service provider unit.

The publication criterion may be a criterion defined by the public authority unit. So, a (trustworthy) independent public entity generally defines the criterion for the private key to be published. This definition of the publication criterion is independent on other parameters and may be a general rule of verification.

The publication criterion may be a criterion defined by the secure element that digitally signs the personal data. So, a (trustworthy) individual entity defines the criterion for the private key to be published. This definition may be scenario-dependent and may take other parameters into account, such as a currently available data transmission speed, an actual data volume or verification capabilities at the service provider unit.

Preferably, the timestamp data is used for determining that the publication criterion is fulfilled. Preferably a predefined time duration value is set and upon exceeding this duration value, the publication criterion is fulfilled. Exceeding may be determined by the public authority unit using a timer/counter that starts measuring/counting upon generation of the timestamp data. So, a strict ruling with hard timing is established and needs to be applied for verifying the personal data. Outside of this set time-window, a verification of the personal data with the generated digital signature is not strong, because anyone other than the secure element could have generated that signature.

The predefined time duration value may be set by the public authority unit or may be a guideline to be fulfilled when verifying personal data.

So, the timestamp data is used for determining that the publication criterion is fulfilled. In this regard, the timestamp data may define a point in time at which the publication criterion is fulfilled.

Using a predefined time duration value enables that the digital signature is valid only for a specific time-period. The time duration value should be defined long enough for the service provider unit to perform the verification and to record the result e.g., in an internal database of the service provider unit. This time-period may be relatively short time, e.g., a few seconds. The predefinition of the time duration may be based on a governmental rule that needs to be applied independent on any transmission system and may be applied generally without exceptions for all verification processes equally. The predefinition of the time duration may be the result of an individual setting defined by the secure element and may be applied individually per each verification process.

The timestamp data may be coded with at least one of a year value, a month value, a day value, an hour value, a minute value, and/or a second value. So, a timestamp data is used that follows the usual representation of time and date data and that may be resolved by other entities in most convenient manner.

The timestamp data may be coded with a time-second value. The time-second value is a value that represents a number of seconds upon a predetermined date-time-value, e.g. 1st of January of the current year at 00:00:00; or 1st of January of a predefined year, such as 2000, at 00:00:00; or another suitable predetermined date-time-value.

The timestamp data may be coded with a strictly monotonous rising count value. The count value may be incremented upon each request for issuing the timestamp data. The request may preferably be sent from the service provider unit and provided to the public authority unit. So, the count value may represent the number of requests for timestamp data, preferably the number of requests for timestamp data of this service provider unit.

Combinations of the structure to encode the timestamp data are possible.

If the timestamp data contains a part that is incremented (count value) with each request for issuing the timestamp data (even if two timestamp requests are made very shortly after each other), it is ensured that the signed personal data can be verified only once.

The timestamp data may be provided from the public authority unit to the service provider unit upon request prior the digitally signing step. The request may be an explicit request that starts the overall verifying method and may therefore be the starting timepoint for this verifying of personal data. As soon as the timestamp data is generated, the publication criterion is set, and the strict timing needs to be fulfilled if authentic data should be received at the service provider unit. So, the service provider unit knows (or can derive) the criterion for publication of the private key.

The cryptographic private key used for the digitally signing may be generated together with a cryptographic public key which together form a cryptographic key pair of an asymmetric key infrastructure. The public key can be shared with the service provider unit to validate the signature and thus, verify the personal data to obtain authentic data.

The cryptographic private key used for the digitally signing step may be derived from a secret that is stored at the public authority and in the secure element. So, the same secret is stored in the public authority and in the secure element independently. As a result, a key pair can be derived at the public authority unit, a public key thereof can be shared with the service provider unit to validate the signature of the signed personal data that are transmitted from the secure element.

Alternatively, the cryptographic private key used for the digitally signing step may be derived from a secret that is stored only in the secure element. The corresponding public key is then provided from the secure element in the transmitting-step.

The cryptographic private key used for the digitally signing may be derived from the secret and the timestamp data. So, it is ensured that the private key and the timestamp data are logically or cryptographically linked. The link may be the result of a concatenation or a conjunction of the secret and the timestamp data.

A cryptographic public key corresponding to the cryptographic private key may be transmitted from the public authority unit to the service provider unit together the timestamp data prior the digitally signing step. So, the service provider unit can authenticate the timestamp data issued by the public authority unit and determine whether to trust these timestamp data or not. So, also the timestamp data are authentic timestamp data.

The timestamp data may be signed by a cryptographic key of the public authority unit and the signed timestamp data may then be provided to the service provider unit prior the digitally signing step. So, the service provider unit - e.g., in possession of the corresponding cryptographic public key - can authenticate the timestamp data issued by the public authority unit to ensure that the timestamp data is authentic.

The cryptographic private key used in the digitally signing step may be derived using a cascaded key-derivation-function. A cascaded key-derivation function may be a derivation function that is staged (cascaded) based on input values for that function being hierarchically ordered. So, when publishing the private key upon fulfillment of the publication criterion, the amount of data to be published can be greatly reduced, if the private key is not generated by a simple key derivation function performed on a secret and the timestamp data, such as HMAC(secret, timestamp data) but instead a cascade of key derivation functions is used.

The cascaded key-derivation-function may have hierarchical input values that relate to the issued timestamp data. The hierarchical input value may be at least one of a year value, a month value, a day value, an hour value, a minute value, and a second value - based on the structure of the issued timestamp data. So, cascaded keys are derived with inputs from hierarchical parts (e.g., year, month, day, etc.) of the timestamp data.

The hierarchical input value may alternatively be a Byte-sequence; a Bit-Sequence or a Nibble-sequence of the timestamp data.

According to another aspect of the invention there is provided a system for verifying personal data. The system comprises a secure element having a secure data storage for storing personal data, a secret, and a public key of a cryptographic key pair. The system also comprises a public authority unit having a secure data storage for storing the secret and a corresponding private key of the cryptographic key pair. The system further comprises a service provider unit configured to send a request for signed personal data to the secure element.

The system being configured to tangibly storing computer program instructions capable of being executed by respective processors, the computer program instructions defining the steps of one of the preceding method.

The public authority unit may be configured to issue a timestamp data upon request from the service provider unit.

The service provider unit may be configured to receive from the public authority unit the timestamp data, timestamp data signed by the public authority unit with the private key; and a cryptographic public key derived from the secret.

The public authority unit may be further configured to publish a cryptographic private key used for digitally signing the personal data when a publication criterion is fulfilled.

The public authority unit may be a service with increased rights, however the issued timestamp data, signed timestamp data and public key is usable for verification of the personal data only for a very short time duration. So, the service has much less potential for abuse than data that a known signature service would issue.

For instance, with the present invention, it is not possible that a service provider can record an entire communication session (incl. session key) with a verification service, and thus subsequently prove to a third unauthorized user (e.g. a spammer, for whom verified addresses are of particular value) that the data is authentic.

Therefore, ideally, in practice, the registration of a service provider unit may be omitted (less bureaucratic hurdles).

The secure element may be configured to receive the timestamp data and the signed timestamp data from the service provider unit and to digitally signing the personal data, wherein the digital signature may comprise the timestamp data and to provide the signed personal data to the service provider unit.

A service provider unit may be public service entity such as a border control, a certificate authority, a vehicle registration authority or any other governmental or citizen related service providing unit. The service provider unit may be private service entity such as a hotel, a financial service provider, a pharmacy, a bank or the like.

An secure element, short SE, in the sense of the present invention is an electronic module that is reduced in size and resources and has a control unit (microcontroller). The term "SE" is synonymous with the term "eID", "UICC", "eUICC", "subscriber identity module", "smart card", "iUICC", "integrated eUICC", "integrated secure element", "embedded secure element", "secure element" or "SIM". SE also includes USIM, TSIM, ISIM, CSIM, or R-UIM.

The SE may be an integral component within a terminal equipment, such as a hard-wired electronic device. Such SEs are also referred to as eUICCs. In this design, these SEs are not intended to be removed from the terminal device and cannot, in principle, be easily replaced. Such SEs can also be designed as embedded secure elements and are a secure hardware component in the device.

The SE can also be a software component in a trusted part of an operating system, a so-called Trusted Execution Environment, or TEE, of the end device. For example, the SE is formed within a secure runtime environment in the form of programs running therein, so-called "trustlets" or "trusted applications".

A terminal device in the sense of the invention is in principle a device or device component with means for communication with a communication network in order to be able to use services of the communication network or to be able to use services of a server via a gateway of the communication network. For example, a mobile terminal such as a smartphone, a tablet PC, a notebook, a PDA can be subsumed under the term. The terminal device may also include, for example, multimedia devices such as digital picture frames, audio devices, television sets, e-book readers, which also have means for communicating with the communication network.

Mobile-enabled terminals include smartphones and cell phones as well as control devices (control devices or measuring devices or combined control/measuring devices) for industrial facilities in commercial or residential environments. Industrial facilities are, for example, production facilities that have one or more control devices (terminals) that can communicate with a background system or/and with each other via a mobile network. Other industrial facilities are smart home facilities such as heating systems or power consumers with end devices in the form of control devices.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.

Fig. 1 shows an exemplary embodiment of a process diagram showing a method of the present invention.

Fig. 2 shows another exemplary embodiment of a process diagram showing a method of the present invention.

Fig. 3a shows a storage of a public authority unit of the present invention.

Fig. 3b shows a storage of a secure element of the present invention.

Fig. 4 shows an exemplary embodiment of a secure element.

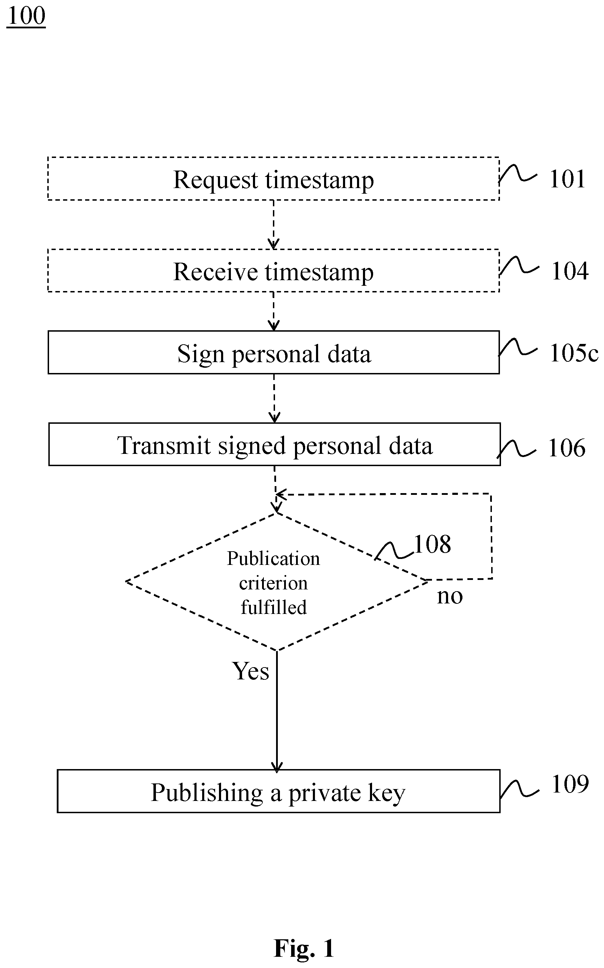

Fig. 1 shows an exemplary embodiment of a process diagram showing a method 100 of the present invention for verifying personal data.

In optional step 101, a timestamp data is requests by a service provider unit SPU at a public authority unit PAU, here a public timestamp server.

The SPU is any kind of service provider that requires authentic data of a user to provide the service. For authentication of personal data, it is required to verify these personal data to obtain the authentic data. The personal data may be any kind of identity data, such as name, birthday, place of birth, identification number, gender and so on.

In optional step 104, the requested timestamp data T are received at the SPU from the PAU ( = issuing the timestamp data T).

In step 105c, the SE, digitally signs the personal data D. The digital signature signatureD comprises the timestamp data T issued by the PAU.

In step 106, the signatureD may containing the personal data D and is transmitted to the SPU.

In optional step 108 it is determined whether a publication criterion is fulfilled. The publication criterion may be a time duration value. Here an actual date/time value may be compared with a predefined time duration value to determine whether the publication criterion is fulfilled.

If the comparison results in that the predefined time duration is not exceeded (No case of step 108) at the time of the determining step 108, then the publication criterion is not fulfilled. The determination is repeated later.

If the comparison results in that the time duration is exceeded (Yes case of step 108) at the time of the determining step 108, then the publication criterion is fulfilled, because the time duration is over.

Alternatively, in the PAU a trigger event is defined to trigger the expiry of the predefined time duration value. As soon as the trigger event occurs, the publication criterion is fulfilled, because the time duration is over.

In step 109, a publishing of the private key required for generating signatureD occurs.

When the publication criterion is fulfilled in the YES-case of step 108, the private key used for signing D is published in step 109. Publishing according to step 109 means that the private key becomes publicly available to everyone. For publishing according to step 109, the private key is registered into a publicly accessible data base of the PAU, this data base may be (read-) accessible for everyone.

In the signing step 105c, a signing algorithm that, given D and a private key, produces the signatureD.

A signature verifying algorithm that, given D, the public key and the signatureD, either accepts or rejects the authenticity of D, whereas acceptance means that D is verified and thus authentic.

Publishing the private key means that signatureD becomes useless, because upon publishing this private key, anyone (non-trustworthy or not) would be in the position to generate signatureD.

The SPU does not need to monitor the publication of the private key of step 109 and it is not necessary to inform the SPU about it.

However, the user of the SE, e.g. the document holder (citizen/customer) of an eID, has an interest in the publication of the private key according to step 109. By its publication, the user of the SE obtains a guarantee that the last digital signature provided to the SPU has - at a certain timepoint - become worthless.

Because of the publishing-step 109, the signatureD that may be spied out from the SPU or even forwarded maliciously by the SPU cannot be used as authentic data anymore. Since this method 100 does not require additional intermediate SPUs, it is less complex and data transmission becomes less technically challenging and less bureaucratic.

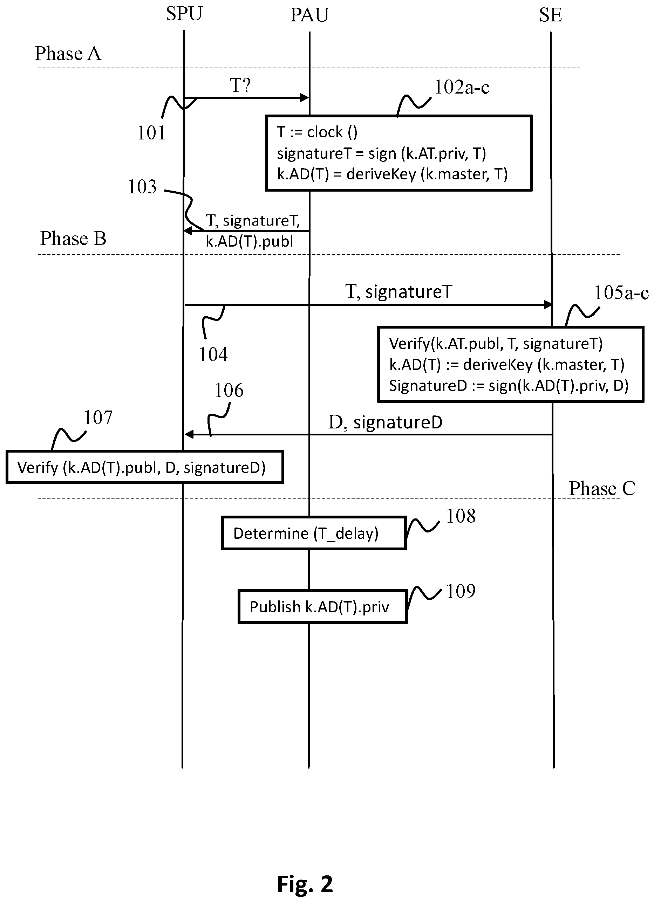

Fig. 2 shows another exemplary embodiment of a process diagram showing a method 100 of the present invention. This diagram is a further specification of the process flow showing in Fig. 1, whereas the statements in Fig. 1 are also valid for Fig. 2 unless otherwise stated.

This method comprises three phases, namely a phase in which the timestamp data T is requested, a phase B, in which the personal data D is signed by applying a signing algorithm; and a phase C, in which the private key used in the signing phase is published.

In Phase A, in step 101, the SPU requests a timestamp data T from the PAU. This request in step 101 is made immediately prior requesting the personal data D from the SE.

In step 102a, the PAU generates a new timestamp data T by for instance applying a clock-function. The PAU may be an entity that generates trusted timestamps according to RFC 3161 or ANSI ASC X.9.95 standard. Alternatively, any suitable and trustworthy timestamp server may be used as the PAU. Preferably, the PAU is a timestamp server that is operated by an issuer of the secure elements, such as an eID issuance authority. According to this step 102a, the PAU generates the timestamp data T. In step 102b, this timestamp data T is digitally signed by using the private key k.AT.priv that is stored in the PAU and so, signatureT is obtained. In step 102c, a cryptographic key pair k.AD(T) is derived from a secret k.master stored in the PAU and the timestamp data T.

In step 103, the timestamp data T, the signatureT and the public key k.AD(T).publ of the derived cryptographic key pair k.AD(T) is provided by the PAU to the SPU.

In phase B, in step 104, the SPU provides the timestamp data T and the signatureT to the SE of the user or citizen whose personal data D needs to be verified (authenticated) for use of the services provided by the SPU. The SE may be an eID of the user or citizen.

In step 105a, the SE verifies the signatureT of the timestamp data T by using the corresponding public key k.AT.publ. that is stored in the SE. In case, the verification is not possible, the method ends without verifying the personal data D.

In step 105b, the SE derives the private (signature) key k.AD(T).priv from the timestamp data T and the secret k.master (which may be the master key of the SE).

In step 105c, the SE signs the personal data D with the derived private (signature) key k.AD(T).priv. The result of this signing algorithm is the signatureD

In step 106, the SE transmits the personal data D and the signatureD to the SPU.

In step 107, the SPU verifies the signatureD by using the public key k.AD(T).publ, which the SPU previously received from the PAU in step 103. The SPU processes the result of the step 107, e.g. by using the authentic data for registering in a data base of the SPU or by promptly providing a service.

In phase C, , the PAU determines in step 108 whether a publication criterion is fulfilled. The publication criterion is described above. According to Fig. 2, the publication criterion is fulfilled if a time duration value is exceeded. Such a time duration value may be exceeded a few seconds (t_delay) after the step 107 or the step 103.

In step 109, the PAU publishes the private key k.AD(T).priv in a public database, e.g. hosted by the PAU. This database is publicly accessible (at least in a read mode or only in a read mode).

From a security point of view, it is worth mentioning that it is not problematic that the secret is a master key k.master of the SE and a derivation thereof (private key k.AD(T).priv is published in step 109. This is especially true, if the key derivation function is a cryptographically secure one-way function, e.g., with SHA-256 or HMAC-SHA256. Thus, one cannot calculate back to the secret, e.g., the master key k.master from the published private key derived from that master key k.master.

The timestamp data D may comprise a structure that encodes the time in human readable (usual) division of date value e.g. having a year value, a month value, a day value and time value, e.g. having an hour-value, a minute-value and a second-value. For the date 01-01-2023 at 12:00:00 a.m. this would result in timestamp data that is coded with a year value "2023", a month value "01", a day value "01", an hour-value "12", a minutes-value "00" and a seconds-value "00".

The timestamp data D may comprise structure that encodes a time-seconds value starting from a predetermined date-time-value, e.g., a seconds-value that codes all seconds from January 1, 2000, 00:00:00.

The timestamp data D may comprise structure that encodes a strictly monotonically increasing counter that is only incremented with each request 101.

Combinations of these structures are also possible. Other coding are not excluded here.

If the timestamp contains a part that is incremented with each request 101 of a timestamp data (even if two timestamp data requests 101 are made very shortly after each other), it is ensured that the signatureD can be verified only once.

In an implementation of the system or the method, the PAU may have access to the master keys k.master of all SE, e.g. all eID documents. So, it is most preferred that the PAU is a public server that is operated by a governmental entity and/or by the issuer of the SE, such as an eID-issuer.

However, in an implementation, SEs may share their master keys k.master and so, there may be only a few master keys in the system. E.g. for the German electronic ID card, a few 1000 or 10000 ID cards share the same master key. The secret, e.g. the master key, should be kept safe from spying in the SE as well as in the PAU.

When publishing the private key k.AD(T).priv in step 109, the amount of key-data to be published can be greatly reduced by storing the private key k.AD(T).priv not in a simple key derivation function, e.g. k.AD(T).priv = HMAC(k.master, T), but rather in a cascade of key derivation functions having inputs from hierarchical parts of the timestamp data Tstructure. e.g., a year-value, a month-value, a day-value, an hour-value, a minute-value, a second-value, etc.

For instance, following private key derivation function could be used:

```
k.AD(T).priv =
HMAC(HMAC(HMAC(HMAC(HMAC(HMAC(k.master, year), month) day),
hour), min), sec)
```

This allows the intermediate results to be published in each case a timestamp data part is "expired" (publication criterion is fulfilled), from which all private keys k.AD(T).priv of the respective time period can then be derived.

If the intermediate result
HMAC(HMAC(k.master, 2022), 6)
is published by the PAU in step 109, all private keys k.AD(T).priv can be derived having timestamp data "June 2022".

If the intermediate result
HMAC (k.master, 2022)
is published, all private keys k.AD(T).priv can be derived having timestamp data "year 2022". keys to timestamps

In the following, there is a comparison of the amount of data to be published with simple key derivation and with cascaded key derivation to demonstrate the amount of data that can be reduced when publishing the private key in step 109 for a plurality of verifications:

Assume a private key k.AD(T).priv has a size of 32 bytes and timestamp data are to be created at a resolution of 10 seconds:

For a simple key derivation, e.g.,

```
k.AD (T) .priv
= HMAC (k.master, T),365 * 24 * 60 * 6 * 32 bytes
= 100915200 bytes
= approx. 100 Mbytes
```

per each year that would need to be published.

In contrast, for a cascaded key derivation, e.g.

```
k.AD (T) .priv
=HMAC(HMAC(HMAC(HMAC(k.master,year),month),day),hour),min),sec),
```

the following five intermediate results are published for month, day, hour, minute, and seconds in the worst-case scenario, which is December 31, 2022, 23:59:50:

(1) HMAC(HMAC(k.master,2022),month)
for all fully elapsed 11 months;

(2) HMAC(HMAC(HMAC(k.master,2022),12),day)
for all completely elapsed 30 December days;

(3) HMAC(HMAC(HMAC(HMAC(k.master,2022),12),31),hour)
for all 23 fully elapsed hours of the 31 December;

(4) HMAC(HMAC(HMAC(HMAC(HMAC(k.master,2022),12),31),23),min)
for all 59 completely elapsed minutes of the last hour of 31 December; and

(5) HMAC(HMAC(HMAC(HMAC(HMAC(k.master,2022),12)31),23),59),sec)
for all 5 fully elapsed 10s intervals of the last minute of the last hour of 31 December.

To sum up, in total per year there is only necessary:

```
(11 + 30 + 23 + 59 + 5) * 32 bytes
= 4096 bytes
= 4KBytes
```

As soon as the year 2022 has completely expired, it is sufficient only to publish: HMAC(k.master, 2022).

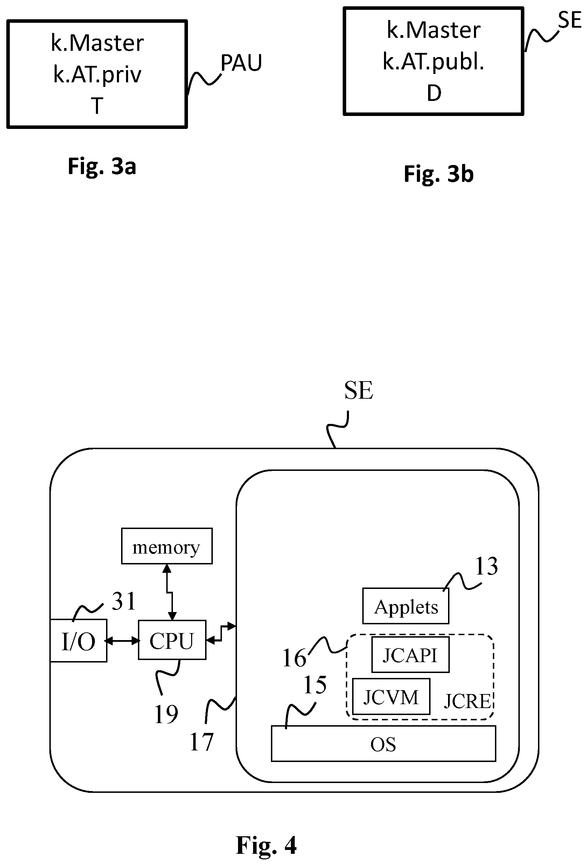

Fig. 3a shows an exemplary storage of a public authority unit of the present invention. The storage may comprise a secret k.master and a private key k.AT.priv of a key pair. A timestamp data generating algorithm may be implemented as well, here illustrated with an exemplary timestamp data T of the current time.

Fig. 3b shows an exemplary storage of a secure element of the present invention. The storage may comprise the (same) secret k.master as stored in the PAU storage, the corresponding public key k.AT.publ of the key pair whose private key is stored in the PAU storage. Personal data D may be stored as well.

Fig. 4 shows a block diagram of an SE used for the method and the system according to the present invention. The SE is preferably an eID, such as a ID card or an electronic passport. Alternatively, the SE is a portable data carrier, e.g. a smartcard, or an eUICC or an iUICC. The SE has an operating system OS in which parts of the method 100, especially the steps 104, 105a-c according to Figs. 1 and 2 run as instructions. For example, the operating system OS is a native operating system. It is also conceivable that the operating system OS is arranged to run a Java Card Runtime Environment, JCRE.

The SE is configured to exchange data with the external environment, e.g. with a terminal device (not shown in Fig. 4). For data transmission or communication between the SE and the terminal device, both the SE and the terminal device each have suitable communication interfaces I/O. The interfaces can, for example, be designed in such a way that the communication between them or between the SE and the terminal device is connected galvanically, i.e. with contacts. The contact assignment is defined in ISO/IEC 7816. In an embodiment not shown, the communication interface is contactless, for example according to an RFID or NFC or WLAN standard. The terminal device may forward an identity request from a network to the SE.

The SE also has a central processing or control unit, CPU, in communication with the interface I/O. Primary tasks of the CPU include performing arithmetic and logic functions and accessing (reading, writing, modifying, overwriting, creating, and/or deleting) files in the SE, as defined by program code executed by CPU. For example, the files are Elementary Files, EF, in a File Directory, Directory Files, DF, of a Root Directory or a Profile Directory of the SE of a non-volatile memory. The CPU is further in communication with a volatile random access memory, RAM (not shown), and the non-volatile rewritable memory. Preferably, the non-volatile memory is a flash memory (flash EEPROM). This may, for example, be a flash memory with a NAND or a NOR architecture.

In the preferred embodiment shown in Fig. 4, the nonvolatile memory stores the program code that can be executed by the CPU. In particular, the program code of the OS, the JCRE (consisting of Java Card Virtual Machine, JCVM and Java Card Application Programming Interfaces, JCAPI), applets may be stored in the non-volatile memory. Especially, a signing function for providing the digitally signing of personal data D according to step 105c is stored in the memory and can be executed by the CPU. The memory of the SE may at least include the data as shown in Fig. 3b.

Within the scope of the invention, any of the elements described and/or drawn and/or claimed may be combined in any way.

REFERENCE SIGNS

SPU        Service Provider Unit
PAU        Public Authority Unit
SE         secure element

| T | timestamp data |
| signatureT | signed timestamp data |
| D | personal data |
| signatureD | signed personal data |
| sign() | signing algorithm (function) |
| k.master | secret |
| k.AT.priv | private key for signing the publication criterion |
| k.AT.publ | public key for checking the signature of the publication criterion |
| k.AD(T).priv | derived private key from secret (and publication criterion) |
| k.AD(T).publ | derived public key from secret (and publication criterion) |
| CPU | Central processing unit |
| OS | Operating system |
| JCRE | Java Card Runtime Environment |
| JCVM | Java Card Virtual Machine |
| JCAPI | Java Card Application Programing Interface |
| I/O | Input Output Interface |
| 101 | request data related to publication criterion |
| 102a | generate publication criterion, |
| 102b | sign publication criterion with k.AT.priv |
| 102c | derive key from shared secret |
| 103 | provide timestamp data and signed timestamp data and k.AD(T).publ |
| 104 | provide timestamp data and signed timestamp data |
| 105a | verify timestamp data with k.AT.publ |
| 105b | derive key from secret |
| 105c | signing personal data |
| 106 | transmit personal data and signed personal data |
| 107 | verify signature of the personal data |
| 108 | determine if publication criterion is fulfilled |
| 109 | publish k.AD(T).priv |
| Phase A | Requesting timestamp data |
| Phase B | Signing personal data |
| Phase C | Publishing private key |

**Claims**

1. A method (100) for verifying personal data (D), the method (100) comprising the following steps:

   - Digitally signing (105c), by means of a secure element (SE), of personal data (D), wherein the digital signature (signatureD) comprises timestamp data (T), the timestamp data (T) being issued by a public authority unit (PAU);
   - Transmitting (106), by means of the secure element (SE), of the signed personal data (D, signatureD) to a service provider unit (SPU) for verifying the personal data (D); and
   - Publishing (109), by means of the public authority (PAU), a cryptographic private key (k.AD(T).priv) used for digitally signing (105c) the personal data (D) when a publication criterion is fulfilled.

2. The method (100) according to claim 1, wherein the publishing step (109) is made upon determining (108) that the publication criterion is fulfilled.

3. The method (100) according to claim 1 or 2, wherein the timestamp data (T) is used for determining (108) that the publication criterion is fulfilled, preferably that a predefined time duration value is exceeded.

4. The method (100) according to one of the preceding claims, wherein the public authority unit (PAU), preferably being a timestamp service provider unit, defines the publication criterion.

5. The method (100) according to one of the preceding claims, wherein the timestamp data (T) is coded with at least one or a combination of:

   - at least one of a year value, a month value, a day value, an hour value, a minute value, and/or a second value; and/or

- a time-seconds value starting from a predetermined date-time-value; and/or
- a strictly monotonous rising count value, the count value being incremented upon each request (101) for issuing the timestamp data (T), the request (101) preferably being sent from the service provider unit (SPU) to the public authority unit (PAU).

6. The method (100) according to one of the preceding claims, wherein the timestamp data (T) is provided from the public authority unit (PAU) to the service provider unit (SPU) upon request (101) prior the digitally signing step (105c).

7. The method (100) according to one of the preceding claims, wherein the cryptographic private key (k.AD(T).priv) used for the digitally signing is derived from a secret (k.master) that is stored at the public authority (PAU) and in the secure element (SE).

8. The method (100) according to claim 7, wherein the cryptographic private key (k.AD(T).priv) used for the digitally signing (105c) is derived from that secret (k.master) and the timestamp data (T).

9. The method (100) according to one of the preceding claims, wherein a cryptographic public key (k.AD(T).publ) corresponding to the cryptographic private key (k.AD(T).priv) is provided from the public authority unit (PAU) to the service provider unit (SPU) together the timestamp data (T) prior the digitally signing step (105c).

10. The method (100) according to one of the preceding claims, wherein the timestamp data (T) is signed by a cryptographic private key (k.AT.priv) of the public authority unit (PAU) and the signed timestamp data (T, signatureT) is provided to the service provider unit (SPU) prior the digitally signing step (105c).

11. The method (100) according to one of the preceding claims, wherein a predefined number of verification-attempts for verifying the personal data (D) with a corresponding cryptographic public key (k.AD(T).publ.) fulfills the publication criterion, the predefined number of verification-attempts being preferably less than five, more preferably less than three, most preferably one attempt.

12. The method (100) according to one of the preceding claims, wherein the cryptographic private key (k.AD(T).priv) used in the digitally signing step (105c) is derived using a cascaded key-derivation-function.

13. The method (100) according to claim 12, wherein the cascaded key-derivation-function has hierarchical input values that relate to the issued timestamp data (T), preferably to at least one of a year value, a month value, a day value, an hour value, a minute value and a second value.

14. A system for verifying personal data (D), comprising:

    - a secure element (SE) having a secure data storage (memory) for storing personal data (D), a secret (k.master), and a public key (k.AT.publ) of a cryptographic key pair (k.AT);
    - a public authority unit (PAU) having a secure data storage for storing the secret (k.master) and a corresponding private key (k.AT.priv) of the cryptographic key pair (k.AT);
    - a service provider unit (SPU) configured to send a request (101) for signed personal data (D) to the secure element (SE);
    - wherein the system being configured to tangibly storing computer program instructions capable of being executed by respective processors (CPU), the computer program instructions defining the steps of one of the preceding method claims 1 to 13.

15. The system according to claim 14, wherein

    - the public authority unit (PAU) is configured to issue a timestamp data (T) upon request (101) from the service provider unit (SPU);
    - the service provider unit (SPU) is configured to receive from the public authority unit the timestamp data (T), timestamp data (signatureT) signed by the public authority unit (PAU) with the private key (k.AT.priv), and a cryptographic public key (k.AD(T).publ) derived from the secret (k.master);
    - the secure element (SE) is configured to receive the timestamp data (T) and the signed timestamp data (signatureT) from the service provider unit (SPU) and to digitally signing (105c) the personal data (D), wherein the digital signature (signatureD) for signing (105c) the personal data (D) comprises the timestamp data (T) and to provide the signed personal data to the service provider unit;

- the public authority unit is further configured to publish a cryptographic private key used for digitally signing the personal data when a publication criterion is fulfilled.

**Patentansprüche**

1. Verfahren (100) zum Verifizieren persönlicher Daten (D), wobei das Verfahren (100) die folgenden Schritte umfasst:

   - digitales Signieren (105c) persönlicher Daten (D) mittels eines sicheren Elements (SE), wobei die digitale Signatur (signatureD) Zeitstempeldaten (T) umfasst, wobei die Zeitstempeldaten (T) durch eine Behördeneinheit (PAU) ausgegeben werden;
   - Senden (106) der signierten persönlichen Daten (D, signatureD) an eine Dienstanbietereinheit (SPU) zum Verifizieren der persönlichen Daten (D) mittels des sicheren Elements (SE); und
   - Veröffentlichen (109) eines kryptographischen privaten Schlüssels (k.AD(T).priv), der zum digitalen Signieren (105c) der persönlichen Daten (D) verwendet wird, wenn ein Veröffentlichungskriterium erfüllt ist, mittels der Behörde (PAU).

2. Verfahren (100) nach Anspruch 1, wobei der Schritt (109) des Veröffentlichens nach dem Bestimmen (108), dass das Veröffentlichungskriterium erfüllt ist, ausgeführt wird.

3. Verfahren (100) nach Anspruch 1 oder 2, wobei die Zeitstempeldaten (T) verwendet werden, um zu bestimmen (108), dass das Veröffentlichungskriterium erfüllt ist, vorzugsweise, dass ein im Voraus definierter Zeitdauerwert überschritten ist.

4. Verfahren (100) nach einem der vorhergehenden Ansprüche, wobei die Behördeneinheit (PAU), die vorzugsweise eine Zeitstempel-Dienstanbietereinheit ist, das Veröffentlichungskriterium definiert.

5. Verfahren (100) nach einem der vorhergehenden Ansprüche, wobei die Zeitstempeldaten (T) mit wenigstens einem oder einer Kombination der Folgenden codiert werden:

   - einem Jahreswert und/oder einem Monatswert und/oder einem Tageswert und/oder einem Stundenwert und/oder einem Minutenwert und/oder einem Sekundenwert; und/oder
   - einem Zeit-Sekunden-Wert, der bei einem vorgegebenen Datum-Zeit-Wert beginnt; und/oder
   - einem streng monoton steigenden Zählwert, wobei der Zählwert nach jeder Anforderung (101) zum Ausgeben der Zeitstempeldaten (T) inkrementiert wird, wobei die Anforderung (101) vorzugsweise von der Dienstanbietereinheit (SPU) an die Behördeneinheit (PAU) gesendet wird.

6. Verfahren (100) nach einem der vorhergehenden Ansprüche, wobei die Zeitstempeldaten (T) nach Anforderung (101) vor dem Schritt (105c) des digitalen Signierens von der Behördeneinheit (PAU) für die Dienstanbietereinheit (SPU) bereitgestellt werden.

7. Verfahren (100) nach einem der vorhergehenden Ansprüche, wobei der kryptographische private Schlüssel (k.AD(T).priv), der zum digitalen Signieren verwendet wird, von einem Geheimnis (k.master), das bei der Behörde (PAU) und in dem sicheren Element (SE) gespeichert ist, abgeleitet wird.

8. Verfahren (100) nach Anspruch 7, wobei der kryptographische private Schlüssel (k.AD(T).priv), der zum digitalen Signieren (105c) verwendet wird, von diesem Geheimnis (k.master) und von den Zeitstempeldaten (T) abgeleitet wird.

9. Verfahren (100) nach einem der vorhergehenden Ansprüche, wobei ein kryptographischer öffentlicher Schlüssel (k.AD(T).publ), der dem kryptographischen privaten Schlüssel (k.AD(T).priv) entspricht, zusammen mit den Zeitstempeldaten (T) vor dem Schritt (105c) des digitalen Signierens von der Behördeneinheit (PAU) für die Dienstanbietereinheit (SPU) bereitgestellt wird.

10. Verfahren (100) nach einem der vorhergehenden Ansprüche, wobei die Zeitstempeldaten (T) durch einen kryptographischen privaten Schlüssel (k.AT.priv) der Behördeneinheit (PAU) signiert werden und die signierten Zeitstempeldaten (T, signatureT) vor dem Schritt (105c) des digitalen Signierens für die Dienstanbietereinheit (SPU) bereitgestellt werden.

**11.** Verfahren (100) nach einem der vorhergehenden Ansprüche, wobei eine im Voraus definierte Anzahl von Verifizierungsversuchen zum Verifizieren der persönlichen Daten (D) mit einem entsprechenden kryptographischen öffentlichen Schlüssel (k.AD(T).publ) das Veröffentlichungskriterium erfüllen, wobei die im Voraus definierte Anzahl von Verifizierungsversuchen vorzugsweise kleiner als fünf, bevorzugter kleiner als drei, am meisten bevorzugt ein Versuch ist.

**12.** Verfahren (100) nach einem der vorhergehenden Ansprüche, wobei der kryptographische private Schlüssel (k.AD(T).priv), der in dem Schritt (105c) des digitalen Signierens verwendet wird, unter Verwendung einer gestaffelten Schlüsselableitungsfunktion abgeleitet wird.

**13.** Verfahren (100) nach Anspruch 12, wobei die gestaffelte Schlüsselableitungsfunktion hierarchische Eingangswerte aufweist, die sich auf die ausgegebenen Zeitstempeldaten (T), vorzugsweise auf einen Jahreswert und/oder einen Monatswert und/oder einen Tageswert und/oder einen Stundenwert und/oder einen Minutenwert und/oder einen Sekundenwert, beziehen.

**14.** System zum Verifizieren persönlicher Daten (D), wobei das System Folgendes umfasst:

- ein sicheres Element (SE) mit einer sicheren Datenablage (einem sicheren Speicher) zum Speichern persönlicher Daten (D), eines Geheimnisses (k.master) und eines öffentlichen Schlüssels (k.AT.publ) eines kryptographischen Schlüsselpaars (k.AT);
- eine Behördeneinheit (PAU) mit einer sicheren Datenablage zum Speichern des Geheimnisses (k.master) und eines entsprechenden privaten Schlüssels (k.ADT.priv) des kryptographischen Schlüsselpaars (k.AT);
- eine Dienstanbietereinheit (SPU), die konfiguriert ist, eine Anforderung (101) für signierte persönliche Daten (D) an das sichere Element (SE) zu senden;
- wobei das System konfiguriert ist, Computerprogrammanweisungen, die in der Lage sind, durch jeweilige Prozessoren (CPU) ausgeführt zu werden, wobei die Computerprogrammanweisungen die Schritte eines der vorhergehenden Verfahrensansprüche 1 bis 13 definieren, konkret zu speichern.

**15.** System nach Anspruch 14, wobei

- die Behördeneinheit (PAU) konfiguriert ist, nach Anforderung (101) von der Dienstanbietereinheit (SPU) Zeitstempeldaten (T) auszugeben;
- die Dienstanbietereinheit (SPU) konfiguriert ist, die Zeitstempeldaten (T) von der Behördeneinheit zu empfangen, wobei die Zeitstempeldaten (signatureT) durch die Behördeneinheit (PAU) mit einem privaten Schlüssel (k.AT.priv) und mit einem kryptographischen öffentlichen Schlüssel (k.AD(T).publ), der von dem Geheimnis (k.master) abgeleitet ist, signiert sind;
- das sichere Element (SE) konfiguriert ist, die Zeitstempeldaten (T) und die signierten Zeitstempeldaten (signatureT) von der Dienstanbietereinheit (SPU) zu empfangen und die persönlichen Daten (D) digital zu signieren (105c), wobei die digitale Signatur (signatureD) zum Signieren (105c) der persönlichen Daten (D) die Zeitstempeldaten (T) umfasst, und die signierten persönlichen Daten für die Dienstanbietereinheit bereitzustellen;
- die Behördeneinheit ferner konfiguriert ist, einen kryptographischen privaten Schlüssel, der zum digitalen Signieren der persönlichen Daten verwendet wird, zu veröffentlichen, wenn ein Veröffentlichungskriterium erfüllt ist.

## Revendications

**1.** Procédé (100) pour vérifier des données personnelles (D), le procédé (100) comprenant les étapes suivantes :

- signer numériquement (105c), au moyen d'un élément sécurisé (SE), les données personnelles (D), la signature numérique (signatureD) comprenant des données d'horodatage (T), les données d'horodatage (T) étant émises par une unité d'autorité publique (PAU) ;
- transmettre (106), au moyen de l'élément sécurisé (SE), les données personnelles signées (D, signatureD) à une unité de prestataire de services (SPU) pour vérifier les données personnelles (D) ; et
- publier (109), au moyen de l'autorité publique (PAU), une clé privée cryptographique (k.AD(T).priv) utilisée pour signer numériquement (105c) les données personnelles (D) lorsqu'un critère de publication est satisfait.

2. Procédé (100) selon la revendication 1, dans lequel l'étape de publication (109) est effectuée après avoir déterminé (108) que le critère de publication est satisfait.

3. Procédé (100) selon la revendication 1 ou la revendication 2, dans lequel les données d'horodatage (T) sont utilisées pour déterminer (108) que le critère de publication est satisfait, de préférence qu'une valeur de durée prédéfinie est dépassée.

4. Procédé (100) selon l'une des revendications précédentes, dans lequel l'unité d'autorité publique (PAU), de préférence une unité de prestataire de services d'horodatage, définit le critère de publication.

5. Procédé (100) selon l'une des revendications précédentes, dans lequel les données d'horodatage (T) sont codées avec au moins un ou une combinaison des éléments suivants :

   - au moins l'une parmi une valeur d'année, une valeur de mois, une valeur de jour, une valeur d'heure, une valeur de minute et/ou une valeur de seconde ; et/ou
   - une valeur de temps en secondes à partir d'une valeur de date et d'heure prédéterminée ; et/ou
   - une valeur de comptage croissante strictement monotone, la valeur de comptage étant incrémentée à chaque demande (101) d'émission des données d'horodatage (T), la demande (101) étant de préférence envoyée par l'unité de prestataire de services (SPU) à l'unité d'autorité publique (PAU).

6. Procédé (100) selon l'une des revendications précédentes, dans lequel les données d'horodatage (T) sont fournies par l'unité d'autorité publique (PAU) à l'unité de prestataire de services (SPU) sur demande (101) avant l'étape de signature numérique (105c).

7. Procédé (100) selon l'une des revendications précédentes, dans lequel la clé cryptographique privée (k.AD(T).priv) utilisée pour la signature numérique est dérivée d'un secret (k.master) qui est stocké auprès de l'autorité publique (PAU) et dans l'élément sécurisé (SE).

8. Procédé (100) selon la revendication 7, dans lequel la clé cryptographique privée (k.AD(T).priv) utilisée pour la signature numérique (105c) est dérivée de ce secret (k.master) et des données d'horodatage (T).

9. Procédé (100) selon l'une des revendications précédentes, dans lequel une clé cryptographique publique (k.AD(T).publ) correspondant à la clé cryptographique privée (k.AD(T).priv) est fournie par l'unité d'autorité publique (PAU) à l'unité de prestataire de services (SPU) avec les données d'horodatage (T) avant l'étape de signature numérique (105c).

10. Procédé (100) selon l'une des revendications précédentes, dans lequel les données d'horodatage (T) sont signées par une clé cryptographique privée (k.AT.priv) de l'unité d'autorité publique (PAU) et les données d'horodatage signées (T, signatureT) sont fournies à l'unité de prestataire de services (SPU) avant l'étape de signature numérique (105c).

11. Procédé (100) selon l'une des revendications précédentes, dans lequel un nombre prédéfini de tentatives de vérification pour vérifier les données personnelles (D) avec une clé cryptographique publique correspondante (k.AD(T).publ.) satisfait au critère de publication, le nombre prédéfini de tentatives de vérification étant de préférence inférieur à cinq, de préférence inférieur à trois, et de préférence unique.

12. Procédé (100) selon l'une des revendications précédentes, dans lequel la clé cryptographique privée (k.AD(T).priv) utilisée dans l'étape de signature numérique (105c) est dérivée à l'aide d'une fonction de dérivation de clé en cascade.

13. Procédé (100) selon la revendication 12, dans lequel la fonction de dérivation de clé en cascade comporte des valeurs d'entrée hiérarchiques qui se rapportent aux données d'horodatage (T) émises, de préférence à au moins l'une d'une valeur d'année, d'une valeur de mois, d'une valeur de jour, d'une valeur d'heure, d'une valeur de minute et d'une valeur de seconde.

14. Système de vérification de données personnelles (D), comprenant :

   - un élément sécurisé (SE) comportant une mémoire de données sécurisée (mémoire) pour stocker des données personnelles (D), un secret (k.master) et une clé publique (k.AT.publ) d'une paire de clés cryptographiques (k.AT) ;
- une unité d'autorité publique (PAU) comportant une mémoire sécurisée pour stocker le secret (k.master) et une clé privée correspondante (k.AT.priv) de la paire de clés cryptographiques (k.AT) ;
- une unité de prestataire de services (SPU) configurée pour envoyer une demande (101) de données personnelles signées (D) à l'élément sécurisé (SE) ;
- le système étant configuré pour stocker de manière tangible des instructions de programme informatique pouvant être exécutées par des processeurs respectifs (CPU), les instructions de programme informatique définissant les étapes de l'une des revendications 1 à 13 précédentes.

**15.** Système selon la revendication 14, dans lequel

- l'unité d'autorité publique (PAU) est configurée pour émettre des données d'horodatage (T) sur demande (101) de l'unité de prestataire de services (SPU) ;
- l'unité de prestataire de services (SPU) est configurée pour recevoir de l'unité d'autorité publique les données d'horodatage (T), les données d'horodatage (signatureT) signées par l'unité d'autorité publique (PAU) avec la clé privée (k.AT.priv), et une clé publique cryptographique (k.AD(T).publ) dérivée du secret (k.master) ;
- l'élément sécurisé (SE) est configuré pour recevoir les données d'horodatage (T) et les données d'horodatage signées (signatureT) de l'unité de prestataire de services (SPU) et pour signer numériquement (105c) les données personnelles (D), où la signature numérique (signatureD) pour la signature (105c) des données personnelles (D) comprend les données d'horodatage (T), et pour fournir les données personnelles signées à l'unité de prestataire de services ;
- l'unité d'autorité publique est en outre configurée pour publier une clé cryptographique privée utilisée pour signer numériquement les données personnelles lorsqu'un critère de publication est satisfait.

<u>100</u>

```
┌ ─ ─ ─ ─ ─ ─ ─ ─ ─ ─ ─ ─ ─ ─ ─ ─ ─ ┐
     Request timestamp              ⟿ 101
└ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ┐
     Receive timestamp              ⟿ 104
└ ─ ─ ─ ─ ─ ─ ─ ─ ─ ─ ─ ─ ─ ─ ─ ─ ─ ┘
                    │
                    ▼
┌───────────────────────────────────┐
     Sign personal data             ⟿ 105c
└───────────────────────────────────┘
                    │
                    ▼
┌───────────────────────────────────┐
   Transmit signed personal data    ⟿ 106
└───────────────────────────────────┘
                    │
                    ▼
              Publication          ⟿108
              criterion                 no
              fulfilled
                 Yes
                    │
                    ▼
┌───────────────────────────────────┐
    Publishing a private key         ⟿ 109
└───────────────────────────────────┘
```

**Fig. 1**

**Fig. 2**

k.Master
k.AT.priv
T

PAU

**Fig. 3a**

k.Master
k.AT.publ.
D

SE

**Fig. 3b**

SE

memory

31

I/O

CPU

19

17

15

16

13

Applets

JCAPI

JCVM    JCRE

OS

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020374270 A